# EUROPÄISCHE PATENTSCHRIFT

(11) **EP 0 578 630 B1**
(45) Veröffentlichungstag und Bekanntmachung des Hinweises auf die Patenterteilung: **21.02.1996**
(21) Anmeldenummer: 93890131.1
(22) Anmeldetag: 30.06.1993
(51) Int. Cl.: G01N 21/77

(54) **Sensormembran eines optischen Sensors zur Bestimmung eines physikalischen oder chemischen Parameters einer Probe**
Sensor membrane of an optical sensor for the determination of a physical or chemical parameter of a sample
Membrane d'un capteur optique pour déterminer un paramètre physique ou chimique d'un échantillon

(30) Priorität: 09.07.1992 AT 1409/92
(43) Veröffentlichungstag der Anmeldung: 12.01.1994
(73) Patentinhaber: AVL Medical Instruments AG, CH-8207 Schaffhausen (CH)
(72) Erfinder: Klimant, Ingo, A-8063 Graz (AT); Wolfbeis, Otto S., Prof.Dr., A-8046 Graz (AT); Leiner, Marco Jean-Pierre. Dr., A-8045 Graz (AT); Karpf, Hellfried, Dr., A-8043 Graz (AT); Kovacs, Barna, Dr., H-7624 Pecs, Ungarn (HU)
(74) Vertreter: Krause, Walter, Dr. Dipl.-Ing.

(56) Entgegenhaltungen:
- EP-A- 0 190 830
- EP-A- 0 283 206
- DE-A- 4 118 681

## Beschreibung

Die Erfindung betrifft eine Sensormembran eines optischen Sensors zur Bestimmung eines physikalischen oder chemischen Parameters einer Probe, mit einer homogen in der Polymermatrix der Sensormembran immobilisierten Indikatorsubstanz, welche mit der Probe in zumindest indirektem Kontakt steht und bei einer Änderung des zu messenden Parameters zumindest eine ihrer optischen Eigenschaften ändert, wobei die Indikatorsubstanz als Ionenpaar vorliegt und aus einem kationischen oder anionischen Farbstoffmolekül und zumindest einem die elektrische Ladung des Farbstoffmoleküls kompensierenden Gegenion besteht.

Es sind bereits eine Vielzahl von Indikatorsubstanzen bekannt, welche auf physikalische oder chemische Parameter (z.B. Temperatur, pH-Wert, O₂-Konzentration oder die Konzentration biologischer Substrate) mit einer Änderung einer optischen Eigenschaft der Indikatorsubstanz reagieren. Die Änderung dieser Eigenschaft, beispielsweise Fluoreszenzintensität, Fluoreszenzabklingzeit, Absorption u.s.w., kann mit bekannten optischen Verfahren und Meßeinrichtungen erfaßt und der zu messenden Größe eines bestimmten Parameters zugeordnet werden.

Eine gemeinsame Forderung an Sensormembranen, welche derartige Indikatorsubstanzen immobilisiert haben, besteht darin, daß diese Immobilisierung möglichst homogen erfolgen soll und die Indikatoren für das Probengut weitgehend unlöslich vorliegen sollen.

Beispielsweise ist aus der EP-B1 0 109 958 eine Meßeinrichtung zur Bestimmung des O₂-Gehaltes einer Probe bekannt geworden, welche sich durch die Verwendung von weichmacher-kompatiblen, insbesonders linearen, amorphen Polymeren als Trägermaterial für den Indikator auszeichnet. Neben dem eingebetteten Indikatormolekülen ist noch zusätzlich ein Weichmacher enthalten. Als konkretes Beispiel wird weiters angeführt, daß die Indikatorbeweglichkeit im Polymer durch eine chemische Modifizierung der Indikatorsubstanz, z.B. Alkylierung mit längeren C-Ketten, eingeschränkt wird.

Durch die direkte Bindung der Indikatorsubstanz an C-Ketten bzw. an polymere Trägermaterialien, verlieren jedoch viele Indikatorsubstanzen Teile ihrer positiven Eigenschaften, sodaß beispielsweise Ansprechzeit, Empfindlichkeit, Auflösung oder Signalhöhe durch diese Bindung beeinträchtigt werden.

Weiters ist aus der EP-A2 0 190 830 die homogene Immobilisierung von Übergangsmetallkomplexen in Polymeren mit hoher Sauerstoffpermeabilität bekannt geworden. Im zuletzt genannten Beispiel erfolgt eine homogene Immobilisierung von beispielsweise Rutheniumkomplexen in PVC mit geringen Weichmacherkonzentrationen. Dieses Material wird dann anstelle des Mantels eines optischen Lichtleiters angebracht und über den Lichtleiter optisch angeregt. Als Farbstoffe werden Ruthenium, Osmium- und Iridiumkomplexe genannt, wobei die Komplexe mit einem Gegenion elektrisch abgesättigt sind. Als Polymere finden PVC, Polyvinylbutyral sowie Polyvinylacetat Verwendung. Als Weichmacher werden Phthalsäure-, Benzoesäure-, Sebacinsäure- und Adipinsäurederivate sowie, Paraffine verwendet. Als Lösungsmittel werden beispielsweise Aceton und Ethanol genannt. Eine typische Sensormembran aus der EP 0 190 830 besteht somit aus PVC, Ru(diph)₃-perchlorat als Farbstoff, Diisobutylphthalat als Weichmacher und Methylenchlorid als Lösungsmittel.

Weiters ist es in diesem Zusammenhang aus der US-A 5 030 420 bekannt geworden, Farbstoffe, wie beispielsweise Komplexe der Platinmetalle mit Diimin- und Porphyrinliganden in Polymeren wie z.B. PVC, Plexiglas, Silikon- und Naturgummi, Polykarbonat, Teflon u.s.w. zu verwenden. Der Farbstoff kann durch Diffusion in das Polymer eingebracht oder mit dem Prepolymer vermischt werden. Schließlich kann auch eine ionische oder kovalente Bindung an das Polymer erfolgen. Dadurch werden jedoch wiederum, wie bereits oben beschrieben, wesentliche Farbstoffeigenschaften negativ beeinflußt bzw. es eignen sich nicht alle Farbstoffe für die hier angeführten Immobilisierungsmethoden.

So ist insbesondere die in der US-A speziell beschriebene Immobilisierung von tris (4,7-diphenyl-1,10-phenanthrolin) Ru(II) Perchlorat in Silikon GE RTV SILASTIC 118 kein Beweis für eine Lösung des Farbstoffes in der Silikonmatrix, da das hier verwendete Silikon Füllstoffe aufweist und der Farbstoff daran absorbiert ist und nicht in der Matrix gelöst vorliegt.

Schließlich ist aus der EP-A2 0 283 206 die kovalente Immobilisierung von Rutheniumkomplexen in RTV-Silikonen über modifizierte Liganden beschrieben.

Aufgabe der Erfindung ist es, eine Sensormembran vorzuschlagen, welche die Indikatorsubstanz möglichst homogen verteilt enthält, wobei jedoch die charakteristischen Eigenschaften des Farbstoffmoleküls durch die Immobilisierung nicht oder nur in geringem Umfang beeinträchtigt werden sollen. Trotzdem soll die Indikatorsubstanz durch die Probe nicht ausgewaschen oder beeinträchtigt werden. Weiters soll ein Verfahren zur Herstellung einer derartigen Sensormembran vorgeschlagen werden.

Diese Aufgabe wird erfindungsgemäß dadurch gelöst, daß das Gegenion sich ableitet von Verbindungen, die eine ionische Gruppe und a) einen Oligomerrest des der jeweiligen Polymermatrix zugrundeliegenden Monomers, b) langkettige Alkyl-oder Alkylengruppen oder c) Silylgruppen enthalten, wobei das Gegenion an die physikochemischen Eigenschaften der Polymermatrix angepaßte physikochemische Eigenschaften aufweist und das Farbstoffmolekül über dieses Gegenion in der Polymermatrix verankert ist. Angepaßte physikochemische Eigenschaften bedeuten im konkreten Fall:
- möglichst große Löslichkeit in der Polymermatrix
- möglichst ähnliche physikalische Eigenschaften (zwischenmolekulare Wechselwirkungen) und chemische Daten (chemisch verwandt z.B. durch weitgehend ähnliche Strukturformel) wie die Polymermatrix.

Diese Forderungen werden z.B. durch ionische Oligomere (längerkettige Untereinheiten des Polymers) des Polymers und bei vorzugsweise linearkettigen Polymeren optimal erfüllt.

Weiters soll das Gegenion im Polymer möglichst molekulardispers (homogen) vorliegen (d.h. keine kristallinen Bereiche oder Mischungslücken im Polymer bilden).

Ein weiteres Kriterium ist die Unlöslichkeit in der Probenlösung und allen Materialien, welche die Sensorschicht kontaktieren, da ansonsten ein Ausdiffundieren und damit Indikatorverlust in der Sensorschicht erfolgt.

Eine weitere Voraussetzung ist auch die Möglichkeit der Bildung eines Ionenpaares mit dem Indikator.

Mit der erfindungsgemäßen Immobilisierungstechnik entstehen Sensormembranen, welche bisher in bestimmten Polymermaterialien nicht lösbare Indikatorsubstanzen in homogener Verteilung beinhalten, wobei durch die Verankerung des Farbstoffmoleküls über das Gegenion dessen optischen Eigenschaften praktisch nicht beeinträchtigt werden. Es entstehen so rasch auf das jeweilige Analyt ansprechende stabile Sensormembranen mit hoher Signalgüte.

Ein Verfahren zur Herstellung einer derartigen Sensormembran, bei welcher als Indikatorsubstanz Ionenpaare aus einem kationischen oder anionischen Farbstoffmolekül und zumindest einen die elektrische Ladung des Farbstoffmoleküls kompensierenden Gegenion hergestellt werden, ist dadurch gekennzeichnet, daß ein Gegenion mit der physikochemischen Eigenschaften eines Polymers, in welche die Indikatorsubstanz eingebracht werden soll, ausgewählt wird. Das kationische oder anionische Farbstoffmolekül wird dann zugesetzt und das entstehende Ionenpaar in die Polymermatrix eingebaut.

Es ergeben sich in der Folge im wesentlichen drei Herstellungsverfahren. So kann das Ionenpaar dem Prepolymer zugesetzt werden und danach die Polymerisation erfolgen.

Weiters ist es möglich, das mit einem Lösungsmittel versetzte Ionenpaar in das Polymer der Sensormembran eindiffundieren zu lassen.

Schließlich kann das Ionenpaar und das Polymer in einem Lösungsmittel gelöst und vermischt werden. Nach dem Abdiffundieren des Lösungsmittels liegt eine homogene Sensormembran vor.

Die erfindungsgemäße Idee läßt sich auf Sensormembranen für unterschiedlichste Analyte anwenden. So ist in einer Ausführungsvariante zur Bestimmung der O₂-, SO₂- oder der H₂O₂-Konzentration auf der Basis der Fluoreszenzlöschung vorgesehen, daß die Indikatorsubstanz als Farbstoffmolekül einen Übergangsedelmetallkomplex und als Gegenion ein Sulfat-, ein Sulfonat- oder ein Ammoniumion einer langkettigen Alkyl- oder Alkylengruppe enthält, welche als Ionenpaar homogen in der Polymermatrix immobilisiert sind. Unter Fluoreszenzlöschung versteht man die Tatsache, daß die Fluzoreszenzintensität oder die Fluoreszenzabklingzeit eines Farbstoffes durch den zu messenden Parameter einer Probe verringert wird. Das Maß dieser Änderung ist z.B. eine Funktion der Analytkonzentration.

In einer weiteren Ausführungsvariante zur Bestimmung der Konzentration von H⁺(pH), NH₃, CO₂ oder SO₂ ist erfindungsgemäß vorgesehen, daß die Indikatorsubstanz einen pH-aktiven, ionischen Farbstoff und als Gegenion ein Sulfat-, ein Sulfonat- oder ein Ammoniumion einer langkettigen Alkyl- oder Alkylengruppe enthält, welche als Ionenpaar homogen in der Polymermatrix immobilisiert sind. pH-sensitive Farbstoffe sind Verbindungen, deren optische Eigenschaften (Absorption, Fluoreszenzintensität, Abklingzeit) durch Aufnahme oder Abspalten eines Protons verändert werden.

In einer weiteren Ausführungsvariante wird zur Bestimmung des Redoxpotentials vorgeschlagen, daß die Indikatorsubstanz einen ionischen Redoxindikator und als Gegenion ein Sulfat-, ein Sulfonat- oder ein Ammoniumion einer langkettigen Alkyl- oder Alkylengruppe enthält, welche als Ionenpaar homogen in der Polymermatrix immobilisiert sind. Redox-Indikatoren zeichnen sich dadurch aus, daß deren optischen Eigenschaften durch Veränderungen des Redoxpotentials beeinflußt werden.

Schließlich ist in einer weiteren Ausführungsvariante zur Bestimmung der Ionenkonzentration wie z.B. H⁺, Na⁺, K⁺, Ca⁺⁺, Cl⁻, Mg⁺⁺, Pb⁺⁺, Cd⁺, UO₂ ⁺⁺, NO₃ ⁻, Tl⁺, Sr⁺⁺, eine erfindungsgemäße Sensormembran dadurch gekennzeichnet, daß die Indikatorsubstanz als Farbstoff einen ionischen, substituierten, potentialsensitiven Farbstoff und als Gegenion ein Sulfat-, ein Sulfonat- oder ein Ammoniumion einer langkettigen Alkyl- oder Alkylengruppe enthält, welche als Ionenpaar homogen in der Polymermatrix immobilisiert sind. Ionensensitive Farbstoffe bzw. Verbindung sind in der Lage bei Kontakt mit bestimmten Ionen ihre optischen Eigenschaften zu verändern.

In der untenstehenden Tabelle folgen einige Beispiele für ererfindungsgemäß immobilisierbare Ionenpaare, wobei mit 1 der ionische Farbstoff, mit 2 mögliche Gruppen von Gegenionen und mit 3 jeweils mögliche Polymere bezeichnet sind.
A) Löschbare Fluoreszenzfarbstoffe für z.B. O₂, SO₂, H₂O₂,...
   - 1.: Ru(diph)₃ (kationisch)
   - 2.: Trimethylsilylpropansulfonat
   - 3.: Silikonkautschuk

   - 1.: Ru(bpy)₃ (kationisch)
   - 2.: Laurylsulfat
   - 3.: Silikonkautschuk

   - 1.: Platin- oder Palladiumporphyrine mit Sulfonsäuregruppen (anionisch)
   - 2.: langkettige Alkyl- oder Alkylengruppen aufweisende Ammoniumionen
   - 3.: Silikonkautschuk
B) pH-sensitive Farbstoffe (pH-Indikatoren) für z.B. pH, CO₂, SO₂, NH₃...
   - 1.: Chinin (kationisch); Fluoreszenzfarbstoff
   - 2.: langkettige Sulfonationen
   - 3.: Polyvinylchlorid

   - 1.: Bromkresolpurpur (anionisch), Absorptionsfarbstoff
   - 2.: langkettige Alkyl- oder Alkylengruppen aufweisende Ammoniumionen
   - 3.: Polyvinylchlorid
C) Redoxpotential-sensitive Farbstoffe (Redoxindikatoren)
   - 1.: Methylenblau (kationisch); Fluoreszenzfarbstoff
   - 2.: langkettige Alkyl- oder Alkylengruppen aufweisende Sulfonationen
   - 3.: Silikonkautschuk

   - 1.: Thioindigosulfonat (anionisch); Absorptionsfarbstoff
   - 2.: langkettige Alkyl- oder Alkylengruppen aufweisende Ammoniumionen
   - 3.: Polyvinylchlorid
D) Ionen-sensitive Farbstoffe (Metallindikatoren, Chromoionophore) für z.B. Na⁺, K⁺, Ca⁺⁺, Mg⁺⁺,...
   - 1.: Calcein (anionisch); Fluoreszenzfarbstoff
   - 2.: langkettige Alkyl- oder Alkylengruppen aufweisende Ammoniumionen
   - 3.: Polyvinylchlorid

Da Fluoreszenzfarbstoffe auch eine Temperaturabhängigkeit zeigen, sind derartige Sensormembranen auch für die Temperatursensoren einsetzbar.

Zur Realisierung von ionenselektiven Membranen kann als Farbstoff Rhodamin B verwendet werden, welcher mit bestimmten Ionophoren funktionalisiert wird. Untenstehend sind Ionophore für einige Ionen in der Nomenklatur der Firma FLUKA CHEMIE AG, Industriestraße 25, CH-9470 BUCHS, Schweiz, angeführt:

| ETH-Nummer: | Name: | Produktnummer: |
|---|---|---|
| ETH 129 | Calcium-Ionophor II | 21193 |
| ETH 149 | Lithium-Ionophor I | 62557 |
| ETH 227 | Natrium-Ionophor I | 71732 |
| ETH 1001 | Calcium-Ionophor I | 21192 |
| ETH 1117 | Magnesium-Ionophor I | 63082 |
| ETH 1907 | Wasserstoffion-Ionophor II | 95295 |

Nachstehend folgen Beispiele für die Herstellung von in Silikon löslichen Rutheniumkomplexionenpaaren, deren Lumineszenzintensität durch Sauerstoff verringert wird:

### Beispiel 1)

- Kation:: [tris(4,7-diphenyl-1,10-phenanthrolin) Ru(II)]⁺ = Ru(diph)₃
- Gegenion:: Trimethylsilylpropansulfonat
226 mg Rucl₂. 3H₂O werden in 5 ml Ethylenglycol und 0,5 ml H₂O gelöst. Die Lösung wird am Rückfluß auf 160°C erhitzt (Farbumschlag von rotgelb nach blaugrün) und bei 120°C 860 mg an 4,7-Diphenyl-1,10-phenanthrolin in fester Form zugegeben. Die Rektion wird 45 Minuten bei 160°C durchgeführt. 1 ml des Reaktionsgemisches wird mit 10 ml H₂O und 2 ml Aceton versetzt. Zu dieser Lösung werden 5 ml gesättigte Natriumtrimethylsilylpropansulfonatlösung zugegeben. Das resultierende Ionenpaar fällt aus dieser Lösung aus, und kann mit einer Glasfritte abgesaugt werden. Der Niederschlag wird zuerst mit H₂O und anschließend mit Diethylether gewaschen. Abschließend wird der Niederschlag aus Aceton umkristallisiert mit Diethylether gewaschen, und unter Vakuum bei Raumtemperatur getrocknet.

### Beispiel 2)

- Kation:: [tris(2,2'-bipyridyl) Ru(II)]⁺ = Ru(bpy)₃
- Gegenion:: Laurylsulfat
20 ml einer 0,01 M Ru(2,2'-bipyridyl)₃Cl₂-Lösung werden mit 4 ml 0,1 M Natriumlaurylsulfatlösung versetzt. Das ausgefallene Ionenpaar wird nach 30 Minuten mit einer Glasfritte abgesaugt und mehrmals mit H₂O gewaschen. Abschließend wird das Ionenpaar aus einer Aceton/Wasser-Mischung umkristallisiert, mit Diethylether gewaschen und unter Vakuum getrocknet.

### Beispiel 3)

- Kation:: [tris(1,10-phenanthrolin) Ru(II)]⁺ =Ru(phen)₃
- Gegenion:: Trimethylsilylpropansulfonat

Die Herstellung erfolgt im wesentlichen analog Beispiel 1).

Herstellung von sauerstoffempfindlichen Membranen mit dem in Beispiel 1) hergestellten Ionenpaar, durch homogenes Lösen in füllstofffreien Silikonkautschuk.

5 g des Silikonprepolymers (PS 252 Petrarch) werden mit 5 ml 0,001 M Ionenpaarlösung (aus Beispiel 1)) in Chloroform vermischt (Bei diesem Prepolymer handelt es sich um eine Lösung eines essigsäureabspaltenden raumtemperaturvernetzenden Einkomponentensilikons in einem Dioxan/Tetrahydrofuran-Gemisch. Es ist vollkommen füllstofffrei). Die entstandene Lösung wird in 30 µm Schichtdicke auf Mylarfolie aufgezogen. Die Membranen werden bei 90°C 12 Stunden unter Feuchtigkeitsausschluß getrocknet und vernetzt. Die fertigen Membranen sind intensiv gelb gefärbt, fluoreszieren intensiv, und sind sehr sauerstoffempfindlich.

## Patentansprüche

1. Sensormembran eines optischen Sensors zur Bestimmung eines physikalischen oder chemischen Parameters einer Probe, mit einer homogen in der Polymermatrix der Sensormembran immobilisierten Indikatorsubstanz, welche mit der Probe in zumindest indirektem Kontakt steht und bei einer Änderung des zu messenden Parameters zumindest eine ihrer optischen Eigenschaften ändert, wobei die Indikatorsubstanz als Ionenpaar vorliegt und aus einem kationischen oder anionischen Farbstoffmolekül und zumindest einem die elektrische Ladung des Farbstoffmoleküls kompensierenden Gegenion besteht, **dadurch gekennzeichnet,** daß das Gegenion sich ableitet von Verbindungen, die eine ionische Gruppe und a) einen Oligomerrest des der jeweiligen Polymermatrix zugrundeliegenden Monomers, b) langkettige Alkyl- oder Alkylengruppen oder c) Silylgruppen enthalten, wobei das Gegenion an die physikochemischen Eigenschaften der Polymermatrix angepaßte physikochemische Eigenschaften aufweist und das Farbstoffmolekül über dieses Gegenion in der Polymermatrix verankert ist.

2. Sensormembran nach Anspruch 1, zur Bestimmung der O₂-, SO₂-, oder der H₂0₂-Konzentration auf der Basis der Fluoreszenzlöschung, **dadurch gekennzeichnet,** daß die Indikatorsubstanz als Farbstoffmolekül einen Übergangsedelmetallkomplex und als Gegenion ein Sulfat-, ein Sulfonat-oder ein Ammoniumion einer langkettigen Alkyl- oder Alkylengruppe enthält, welche als Ionenpaar homogen in der Polymermatrix immobilisiert sind.

3. Sensormembran nach Anspruch 2, **dadurch gekennzeichnet,** daß die Indikatorsubstanz als Farbstoffmolekül Ru(diph)₃ und als Gegenion Trimethylsilylpropansulfonat enthält, welche als Ionenpaar homogen in der Polymermatrix aus Silikonkautschuk immobilisiert sind.

4. Sensormembran nach Anspruch 2, **dadurch gekennzeichnet,** daß die Indikatorsubstanz als Farbstoffmolekül Ru(phen)₃ und als Gegenion Trimethylsilylpropansulfonat enthält, welche als Ionenpaar homogen in der Polymermatrix aus Silikonkautschuk immobilisiert sind.

5. Sensormembran nach Anspruch 2, **dadurch gekennzeichnet,** daß die Indikatorsubstanz als Farbstoffmolekül Ru(bpy)₃ und als Gegenion Laurylsulfat enthält, welche als Ionenpaar homogen in einer Polymermatrix aus Silikonkautschuk immobilisiert sind.

6. Sensormembran nach Anspruch 2, **dadurch gekennzeichnet,** daß die Indikatorsubstanz als Farbstoffmolekül Platin- oder Palladiumporphyrine mit Sulfonsäuregruppen und als Gegenion langkettige Alkyl- oder Alkylengruppen aufweisende Ammoniumionen enthält, welche als Ionenpaar homogen in einer Polymermatrix aus Silikonkautschuk immobilisiert sind.

7. Sensormembran nach Anspruch 1 zur Bestimmung der Konzentration von H⁺(pH), NH₃, CO₂ oder SO₂, **dadurch gekennzeichnet,** daß die Indikatorsubstanz einen pH-aktiven, ionischen Farbstoff und als Gegenion ein Sulfat-, ein Sulfonat-oder ein Ammoniumion einer langkettigen Alkyl- oder Alkylengruppe enthält, welche als Ionenpaar homogen in der Polymermatrix immobilisiert sind.

8. Sensormembran nch Anspruch 7, **dadurch gekennzeichnet,** daß die Indikatorsubstanz als Farbstoff Chinin und als Gegenion langkettige Alkyl- oder Alkylengruppen aufweisende Sulfonationen enthält, welche als Ionenpaar homogen in der Polymermatrix aus Polyvinylchlorid immobilisiert sind.

9. Sensormembran nach Anspruch 7, **dadurch gekennzeichnet,** daß die Indikatorsubstanz als Farbstoffmolekül Bromkresolpurpur und als Gegenion langkettige Alkyl- oder Alkylengruppen aufweisende Ammoniumionen enthält, welche als Ionenpaar homogen in der Polymermatrix aus Polyvinylchlorid immobilisiert sind.

10. Sensormembran nach Anspruch 1 zur Bestimmung des Redoxpotentials, **dadurch gekennzeichnet,** daß die Indikatorsubstanz einen ionischen Redoxindikator und als Gegenion ein Sulfat-, ein Sulfonat- oder ein Ammoniumion einer langkettigen Alkyl- oder Alkylengruppe enthält, welche als Ionenpaar homogen in der Polymermatrix immobilisiert sind.

11. Sensormembran nach Anspruch 10, **dadurch gekennzeichnet,** daß die Indikatorsubstanz als Farbstoffmolekül Methylenblau und als Gegenion langkettige Alkyl- oder Alkylengruppen aufweisende Sulfonationen enthält, welche als Ionenpaar homogen in der Polymermatrix aus Silikonkautschuk immobilisiert sind.

12. Sensormembran nach Anspruch 10, **dadurch gekennzeichnet,** daß die Indikatorsubstanz als Farbstoffmolekül Thioindigosulfonat und als Gegenion langkettige Alkyl- oder Alkylengruppen aufweisende Ammoniumionen enthält, welche als Ionenpaar homogen in der Polymermatrix aus Polyvinylchlorid immobilisiert sind.

13. Sensormembran nach Anspruch 1 zur Bestimmung der Ionenkonzentrationen, wie z.B. H⁺, Na⁺, K⁺, Ca⁺⁺, Cl⁻, Mg⁺⁺, Pb⁺⁺, Cd⁺, UO₂ ⁺⁺, NO₃ ⁻, Tl⁺, Sr⁺⁺, **dadurch gekennzeichnet,** daß die Indikatorsubstanz als Farbstoff einen ionischen, substituierten, potentialsensitiven Farbstoff und als Gegenion ein Sulfat-, ein Sulfonat- oder ein Ammoniumion einer langkettigen Alkyl- oder Alkylengruppe enthält, welche als Ionenpaar homogen in der Polymermatrix immobilisiert sind.

14. Sensormembran nach Anspruch 13, zur Bestimmung der Kaliumionenkonzentration, **dadurch gekennzeichnet,** daß die Indikatorsubstanz als Farbstoffmolekül durch Valinomycin funktionalisiertes Rhodamin B und als Gegenion langkettige Alkyl- oder Alkylengruppen aufweisende Ammoniumionen enthält, welche als Ionenpaar homogen in der Polymermatrix aus Polyvinylchlorid immobilisiert sind.

15. Sensormembran nach Anspruch 13, zur Bestimmung der Natriumionenkonzentration, **dadurch gekennzeichnet,** daß die Indikatorsubstanz als Farbstoffmolekül durch ETH 227 funktionalisiertes Rhodamin B und als Gegenion langkettige Alkyl- oder Alkylengruppen aufweisende Ammoniumionen enthält, welche als Ionenpaar homogen in der Polymermatrix aus Polyvinylchlorid immobilisiert sind.

16. Sensormembran nach Anspruch 13, zur Bestimmung der Lithiumionenkonzentration, **dadurch gekennzeichnet,** daß die Indikatorsubstanz als Farbstoffmolekül durch ETH 149 funktionalisiertes Rhodamin B und als Gegenion langkettige Alkyl- oder Alkylengruppen aufweisende Ammoniumionen enthält, welche als Ionenpaar homogen in der Polymermatrix aus Polyvinylchlorid immobilisiert sind.

17. Sensormembran nach Anspruch 13, zur Bestimmung der Kalziumionenkonzentration, **dadurch gekennzeichnet,** daß die Indikatorsubstanz als Farbstoffmolekül durch ETH 1001 funktionalisiertes Rhodamin B und als Gegenion langkettige Alkyl- oder Alkylengruppen aufweisende Ammoniumionen enthält, welche als Ionenpaar homogen in der Polymermatrix aus Polyvinylchlorid immobilisiert sind.

18. Sensormembran nach Anspruch 13, zur Bestimmung der Kalziumionenkonzentration, **dadurch gekennzeichnet,** daß die Indikatorsubstanz als Farbstoffmolekül Calcein und als Gegenion langkettige Alkyl- oder Alkylengruppen aufweisende Ammoniumionen enthält, welche als Ionenpaar homogen in der Polymermatrix aus Polyvinylchlorid immobilisiert sind.

19. Sensormembran nach Anspruch 13, zur Bestimmung der Magnesiumionenkonezntration, **dadurch gekennzeichnet,** daß die Indikatorsubstanz als Farbstoffmolekül durch ETH 1117 funktionalisiertes Rhodomin B und als Gegenion langkettige Alkyl- oder Alkylengruppen aufweisende Ammoniumionen enthält, welche als Ionenpaar homogen in der Polymermatrix aus Polyvinylchlorid immobilisiert sind.

20. Sensormembran nach Anspruch 13, zur Bestimmung der H+ Ionenkonzentration, **dadurch gekennzeichnet,** daß die Indikatorsubstanz als Farbstoffmolekül durch ETH 1907 funktionalisiertes Rhodamin B und als Gegenion langkettige Alkyloder Alkylengruppen aufweisende Ammoniumionen enthält, welche als Ionenpaar homogen in der Polymermatrix aus Polyvinylchlorid immobilisiert sind.

## Claims

1. Sensor membrane of an optical sensor for determining a physical or chemical parameter of a sample, with an indicator substance that is homogeneously immobilized in the polymer matrix of the sensor membrane and is, at least indirectly, in contact with the sample and will change at least one of its optical properties upon a change of the parameter to be measured, the indicator substance being provided as ion pair and consisting of a cationic or anionic dye molecule and at least one counterion compensating the electric charge of the dye molecule, wherein the counterion is derived from compounds containing a ionic group and (a) an oligomer residue of the monomer forming the basis of the respective polymer matrix, (b) long-chain alkyl or alkene groups, or (c) silyl groups, the counterion having physico-chemical properties matching the physico-chemical properties of the polymer matrix, and the dye molecule being embedded in the polymer matrix by means of this counterion.

2. Sensor membrane as in claim 1, for determination of the O₂, SO₂, or H₂O₂ concentration based on fluorescence quenching, wherein the indicator substance contains a transition noble metal complex as a dye molecule, and a sulfate, or sulfonate, or ammonium ion of a long-chain alkyl or alkene group as a counterion, which are homogeneously immobilized as ion pair in the polymer matrix.

3. Sensor membrane as in claim 2, **wherein** the indicator substance contains Ru(diph)₃ as a dye molecule and trimethylsilyl propane sulfonate as a counterion, which are homogeneously immobilized as ion pair in the polymer matrix made of silicone rubber.

4. Sensor membrane as in claim 2, **wherein** the indicator substance contains Ru(phen)₃ as a dye molecule and trimethylsilyl propane sulfonate as a counterion, which are homogeneously immobilized as ion pair in the polymer matrix made of silicone rubber.

5. Sensor membrane as in claim 2, **wherein** the indicator substance contains Ru(bpy)₃ as a dye molecule and lauryl sulfate as a counterion, which are homogeneously immobilized as ion pair in a polymer matrix made of silicone rubber.

6. Sensor membrane as in claim 2, **wherein** the indicator substance contains platinum or palladium prophyrins with sulpho groups as a dye molecule and ammonium ions with long-chain alkyl or alkene groups as a counterion, which are homogeneously immobilized as ion pair in a polymer matrix made of silicone rubber.

7. Sensor membrane as in claim 1 for determining the concentration of H⁺ (pH), NH₃, CO₂, or SO₂, **wherein** the indicator substance contains a pH-active, ionic dye, and a sulfate, sulfonate or ammonium ion of a long-chain alkyl or alkene group as a counterion, which are homogeneously immobilized in the polymer matrix as ion pair.

8. Sensor membrane as in claim 7, **wherein** the indicator substance contains quinine as a dye and sulfonate ions with long-chain alkyl or alkene groups as a counterion, which are homogeneously immobilized as ion pair in a polymer matrix made of polyvinyl chloride.

9. Sensor membrane as in claim 7, **wherein** the indicator substance contains bromocresol purple as a dye molecule and ammonium ions with long-chain alkyl or alkene groups as a counterion, which are homogeneously immobilized as ion pair in a polymer matrix made of polyvinyl chloride.

10. Sensor membrane as in claim 1 for determining the redox potential, **wherein** the indicator substance contains a ionic redox indicator and a sulfate, sulfonate or ammonium ion of a long-chain alkyl or alkene group as a counterion, which are homogeneously immobilized in the polymer matrix as ion pair.

11. Sensor membrane as in claim 10, **wherein** the indicator substance contains methylene blue as a dye molecule and sulfonate ions with long-chain alkyl or alkene groups as a counterion, which are homogeneously immobilized as ion pair in a polymer matrix made of silicone rubber.

12. Sensor membrane as in claim 10, **wherein** the indicator substance contains thioindigo sulfonate as a dye molecule and ammonium ions with long-chain alkyl or alkene groups as a counterion, which are homogeneously immobilized as ion pair in a polymer matrix made of polyvinyl chloride.

13. Sensor membrane as in claim 1 for determining ionic concentrations, such as H⁺, Na⁺, K⁺, Ca⁺⁺, Cl⁻, Mg⁺⁺, Pb⁺⁺, Cd⁺, UO₂ ⁺⁺, NO₃ ⁻, Tl⁺, Sr⁺⁺, **wherein** the indicator substance contains a ionic, substituted, potential-sensitive dye as a dye, and a sulfate, sulfonate or ammonium ion of a long-chain alkyl or alkene group as a counterion, which are homogeneously immobilized as ion pair in the polymer matrix.

14. Sensor membrane as in claim 13 for determining the concentration of potassium ions, **wherein** the indicator substance contains valinomycin-functionalized rhodamine B as a dye molecule and ammonium ions with long-chain alkyl or alkene groups as a counterion, which are homogeneously immobilized as ion pair in a polymer matrix made of polyvinyl chloride.

15. Sensor membrane as in claim 13 for determining the concentration of sodium ions, **wherein** the indicator substance contains ETH 227-functionalized rhodamine B as a dye molecule and ammonium ions with long-chain alkyl or alkene groups as a counterion, which are homogeneously immobilized as ion pair in a polymer matrix made of polyvinyl chloride.

16. Sensor membrane as in claim 13 for determining the concentration of lithium ions, **wherein** the indicator substance contains ETH 149-functionalized rhodamine B as a dye molecule and ammonium ions with long-chain alkyl or alkene groups as a counterion, which are homogeneously immobilized as ion pair in a polymer matrix made of polyvinyl chloride.

17. Sensor membrane as in claim 13 for determining the concentration of calcium ions, **wherein** the indicator substance contains ETH 1001-functionalized rhodamine B as a dye molecule and ammonium ions with long-chain alkyl or alkene groups as a counterion, which are homogeneously immobilized as ion pair in a polymer matrix made of polyvinyl chloride.

18. Sensor membrane as in claim 13 for determining the concentration of calcium ions, **wherein** the indicator substance contains calceine as a dye molecule and ammonium ions with long-chain alkyl or alkene groups as a counterion, which are homogeneously immobilized as ion pair in a polymer matrix made of polyvinyl chloride.

19. Sensor membrane as in claim 13 for determining the concentration of magnesium ions, **wherein** the indicator substance contains ETH 1117-functionalized rhodamine B as a dye molecule and ammonium ions with long-chain alkyl or alkene groups as a counterion, which are homogeneously immobilized as ion pair in a polymer matrix made of polyvinyl chloride.

20. Sensor membrane as in claim 13 for determining the concentration of H⁺ ions, **wherein** the indicator substance contains ETH 1907-functionalized rhodamine B as a dye molecule and ammonium ions with long-chain alkyl or alkene groups as a counterion, which are homogeneously immobilized as ion pair in a polymer matrix made of polyvinyl chloride.

## Revendications

1. Membrane de capteur d'un capteur optique pour la détermination d'un paramètre physique ou chimique d'un échantillon, avec une substance indicatrice immobilisée de manière homogène dans la matrice polymère de la membrane de capteur, substance indicatrice qui est en contact au moins indirect avec l'échantillon et modifie au moins une de ses propriétés optiques lors d'une variation du paramètre à mesurer, la substance indicatrice se présentant comme une paire d'ions et étant composée d'une molécule de matière colorante cationique ou anionique et au moins d'un contre-ion compensant la charge électrique de la molécule de colorant, caractérisée en ce que le contre-ion découle de composés, qui contiennent un groupe ionique et a) un radical oligomère du monomère à la base de la matrice polymère correspondante, b) des groupes alkyle ou alkylène à chaîne longue ou c) des groupes silyle, le contre-ion comportant des propriétés physico-chimiques adaptées aux propriétés physico-chimiques de la matrice polymère et la molécule de matière colorante étant ancrée par ce contre-ion dans la matrice polymère.

2. Membrane de capteur selon la revendication 1, pour la détermination de la concentration en O₂, SO₂ ou de la concentration de H₂O₂ sur la base de l'extinction de la luminescence, caractérisée en ce que la substance indicatrice en tant que molécule de matière colorante contient un complexe de métal noble de transition et en tant que contre-ion, un ion sulfate, un ion sulfonate ou un ion ammonium d'un groupe alkyle ou alkylène à chaîne longue, qui sont immobilisés en tant que paire d'ions de manière homogène dans la matrice polymère.

3. Membrane de capteur selon la revendication 2, caractérisée en ce que la substance indicatrice contient comme molécule de matière colorante du Ru(diph)₃ et comme contre-ion du sulfonate de triméthylsilylpropane, qui sont immobilisés comme paire d'ions de manière homogène dans la matrice polymère en caoutchouc silicone.

4. Membrane de capteur selon la revendication 2, caractérisée en ce que 1 substance indicatrice contient comme molécule de matière colorante du RU(phen)₃ et comme contre-ion du sulfonate de triméthylsilylpropane, qui sont immobilisés comme paire d'ions de manière homogène en caoutchouc au silicone.

5. Membrane de capteur selon la revendication 2, caractérisée en ce que la substance indicatrice contient en tant que molécule de matière colorante du RU (bpy)₃ et en tant que contre-ion du sulfate laurylique, qui sont immobilisés comme paire d'ions de manière homogène dans une matrice polymère en caoutchouc silicone.

6. Membrane de capteur selon la revendication 2, caractérisée en ce que la substance indicatrice contient comme molécule de matière colorante de la porphyrine de platine ou de palladium avec des groupes d'acide sulfonique et comme contre-ion des ions ammonium comportant des groupes alkyle ou alkylène à chaîne longue, qui sont immobilisés comme paire d'ions de manière homogène dans une matrice polymère en caoutchouc silicone.

7. Membrane de capteur selon la revendication 1, pour la détermination de la concentration de H⁺(pH), NH₃, CO₂ ou SO₂, caractérisée en ce que la substance indicatrice contient une matière colorante de pH actif, ionique et comme contre-ion un ion de sulfate, un ion de sulfonate ou un ion d'ammonium d'un groupe alkyle ou alkylène à longue chaîne, qui sont immobilisés comme paire d'ions de manière homogène dans une matrice polymère.

8. Membrane de capteur selon la revendication 7, caractérisée en ce que la substance indicatrice contient comme matière colorante de la quinine et comme contre-ion, des sulfonations comprenant des groupes alkyle ou des groupes alkylène à longue chaîne, qui sont immobilisés comme paire d'ions de manière homogène dans la matrice polymère en chlorure de polyvinyle.

9. Membrane de capteur selon la revendication 7, caractérisée en ce que la substance indicatrice contient comme molécule de matière colorante du pourpre de bromocrésol et comme contre-ion des ions ammonium comprenant des groupes alkyle ou des groupes alkylène à longue chaîne, qui sont immobilisés comme paire d'ions de manière homogène dans la matrice polymère en chlorure de polyvinyle.

10. Membrane de capteur selon la revendication 1, pour la détermination du potentiel Redox, caractérisée en ce que la substance indicatrice contient un indicateur Redox ionique et comme contre-ion un ion sulfate, un ion sulfonate ou un ion ammonium d'un groupe alkyle ou d'un groupe alkylène à longue chaîne, qui comme paire d'ions sont immobilisés de manière homogène dans la matricé polymère.

11. Membrane de capteur selon la revendication 10, caractérisée en ce que la substance indicatrice contient comme molécule de matière colorante du bleu de méthylène et comme contre-ion des ions sulfonates comprenant des groupes alkyle ou alkylène, qui comme paire d'ions sont immobilisés d'une manière homogène dans la matrice polymère en caoutchouc silicone.

12. Membrane de capteur selon la revendication 10, caractérisée en ce que la substance indicatrice contient comme molécule de matière colorante du sulfonate thio-indigo et comme contre-ion des ions ammonium comportant des groupes alkyle ou des groupes alkylène, qui comme paire d'ions sont immobilisés de manière homogène dans la matrice polymère en chlorure de polyvinyle.

13. Membrane de capteur selon la revendication 1 pour la détermination des concentrations en ions, comme par exemple H⁺, Na⁺, K⁺, Ca⁺⁺, Cl⁻, Mg⁺⁺, Pb⁺⁺, Cd⁺, UO₂ ⁺⁺, NO₃ ⁻, Tl⁺, Sr⁺⁺, caractérisée en ce que la substance indicatrice contient comme matière colorante un colorant ionique, substitué, sensibleà la tension et comme contre-ion un ion sulfate, un ion sulfate ou un ion ammonium d'un groupe alkyle ou d'un groupe alkylène, qui comme paire d'ions sont immobilisés d'une manière homogène dans la matrice polymère.

14. Membrane de capteur selon la revendication 13, pour la détermination de la concentration en ions potassium, caractérisée en ce que la substance indicatrice contient comme molécule de substance colorante de la rhodamine B fonctionnalisée par de la valinomycine et comme contre-ion des ions ammonium comportant des groupes alkyle ou des groupes alkylène, qui comme paire d'ions sont immobilisés d'une manière homogène dans la matrice polymère en chlorure de polyvinyle.

15. Membrane de capteur selon la revendication 13, pour la détermination de la concentration en ions sodium, caractérisée en ce que la substance indicatrice contient comme molécule de matière colorante, de la rhodamine B fonctionnalisée par ETH227 et comme contre-ion des ions ammonium comportant des groupes alkyle ou des groupes alkylène à longue chaîne, qui comme paire d'ions sont immobilisés d'une manière homogène dans la matrice polymère en chlorure de polyvinyle.

16. Membrane de capteur selon la revendication 13, pour la détermination de la concentration en ions lithium, caractérisée en ce que la substance indicatrice contient comme molécule de matière colorante de la rhodamine B fonctionnalisée par ETH 149 et comme contre-ion des ions ammonium comprenant des groupes alkyle ou des groupes alkylène, qui comme paire d'ions sont immobilisés de manière homogène dans la matrice polymère en chlorure de polyvinyle.

17. Membrane de capteur selon la revendication 13, pour la détermination de la concentration en ions calcium, caractérisée en ce que la substance indicatrice contient comme molécule de matière colorante de la rhodamine B fonctionnalisée par ETH 1001 et comme contre-ion des ions ammonium comportant des groupes alkyle ou des groupes alkylène à chaîne longue, qui sont immobilisés comme paire d'ions de manière homogène dans la matrice polymère en chlorure de polyvinyle.

18. Membrane de capteur selon la revendication 163, pour la détermination de la concentration en calcium, caractérisée en ce que la substance indicatrice contient comme molécule de matière colorante de la calcéine et comme contre-ion des ions aluminium comprenant des groupes alkyle ou des groupes alkylène à chaîne longue, qui comme paire d'ions sont immobilisés de manière homogène dans la matrice polymère en chlorure de polyvinyle.

19. Membrane de capteur selon la revendication 13, pour la détermination de la concentration en ions magnésium, caractérisée en ce que la substance indicatrice contient comme molécule de matière colorante de la rhodamine B fonctionnalisée par ETH 1117 et comme contre-ion des ions ammonium comportant des groupes alkyle ou des groupes alkylène à chaîne longue, qui comme paire d'ions sont immobilisés de manière homogène dans la matrice polymère en chlorure de polyvinyle.

20. Membrane de capteur selon la revendication 13, pour la détermination'de la concentration en ions H⁺, caractérisée en ce que la substance indicatrice contient comme molécule de la matière colorante de la rhodamine B fonctionnalisée par ETH 1907 et comme contre-ion des ions ammonium comportant des groupes alkyle ou des groupes alkylène, qui comme paire d'ions sont immobilisés de manière homogène dans la matrice polymère en chlorure de polyvinyle.
